# EUROPÄISCHE PATENTSCHRIFT

(11) **EP 1 709 428 B1**
(45) Veröffentlichungstag und Bekanntmachung des Hinweises auf die Patenterteilung: **26.09.2007**
(21) Anmeldenummer: 04804227.9
(22) Anmeldetag: 22.12.2004
(51) Int. Cl.: G01N 21/53, G08B 17/107, G08B 29/04

(54) **VERFAHREN ZUR AUSWERTUNG EINES STREULICHTSIGNALS UND STREULICHTDETEKTOR ZUR DURCHFÜHRUNG DES VERFAHRENS**
METHOD FOR EVALUATION OF A SCATTERED LIGHT SIGNAL AND SCATTERED LIGHT DETECTOR USED FOR CARRYING OUT SAID METHOD
PROCEDE POUR EVALUER UN SIGNAL DE LUMIERE DIFFUSEE ET DETECTEUR DE LUMIERE DIFFUSEE SERVANT A LA MISE EN OEUVRE DE CE PROCEDE

(30) Priorität: 27.01.2004 DE 102004004098
(43) Veröffentlichungstag der Anmeldung: 11.10.2006
(73) Patentinhaber: Wagner Alarm- und Sicherungssysteme GmbH, 30853 Langenhagen (DE)
(72) Erfinder: SIEMENS, Andreas, 30880 Laatzen (DE)
(74) Vertreter: Rupprecht, Kay
(86) Internationale Anmeldenummer: PCT/EP2004/014632
(87) Internationale Veröffentlichungsnummer: WO 2005/071390

(56) Entgegenhaltungen:
- US-A- 4 266 219
- US-A- 5 117 219
- US-A- 5 831 537
- US-A1- 2003 001 746
- US-B1- 6 184 537

## Beschreibung

Die Erfindung betrifft ein Verfahren zur Auswertung eines Streulichtsignals, welches von einem Streulichtempfänger beim Detektieren von insbesondere feinen Partikeln in einem Trägermedium erzeugt wird.

Darüber hinaus betrifft die Erfindung einen Streulichtdetektor zur Durchführung oben genannten Verfahrens mit einem Gehäuse, einer Einlassöffnung und einer Auslassöffnung in dem Gehäuse, zwischen denen das Trägermedium das Gehäuse auf einem Strömungspfad durchströmt, mit einer Lichtquelle, die Licht auf ein auf dem Strömungspfand liegendes Streulichtzentrum richtet, mit einem Streulichtempfänger für einen Teil des im Streulichtzentrum an Partikeln gestreuten Lichts, und mit einem Streulichtsignalverstärker zum Verstärken des Streulichtsignals, wobei der Streulichtverstärker als Integrationsverstärker ausgebildet ist.

Derartige Verfahren und Vorrichtungen zur Auswertung eines Streulichtsignals sind bekannt und finden insbesondere bei Streulichtdetektoren in aspirativen Brandmeldeanlagen ihre Anwendung. Diese dienen dem Detektieren von Feststoff- oder Flüssigkeitspartikeln, wobei das Trägermedium aus einer repräsentativen Teilmenge der Raumluft eines zu überwachenden Raumes oder der Gerätekühlluft eines zu überwachenden Gerätes besteht. Bei einer aspirativen Brandmeldeanlage wird diese repräsentative Luftmenge aktiv mittels eines Lüfters angesaugt und in die Einlassöffnung des Streulichtdetektors eingespeist. Bei zu überwachenden Geräten, wie beispielsweise EDV Anlagen oder ähnlichen elektronischen Einrichtungen, wie Mess-, Steuer-, und Regelanlagen, ist es grundsätzlich auch möglich, die Eigenströmung der Gerätekühlluft dazu zu verwenden, eine repräsentative Teilmenge der Gerätekühlluft als Trägermedium in die Einlassöffnung des Streulichtdetektors einzuspeisen. In diesem Fall ist kein aktiv ansaugender Lüfter nötig.

### Ein Streulichtdetektor der eingangs genannten Art arbeitet dabei üblicherweise folgendermaßen:

Während das Trägermedium das Streulichtzentrum auf seinem Strömungspfad durch das Gehäuse des Streulichtdetektors durchströmt, durchquert das Licht der Lichtquelle das Streulichtzentrum und somit das dort durchströmende Trägermedium und wird, sofern es nicht an Partikeln in dem Trägermedium gestreut wird, in einer gegenüberliegenden Lichtfalle absorbiert. Das ist der normale und vorwiegend vorliegende Betriebszustand. Trifft der Lichtstrahl der Lichtquelle auf ein Partikel, beispielsweise ein Rauchpartikel oder ein Rauchaerosol, welches einen ersten Hinweis auf einen Entstehungsbrand liefert, lenkt dieses Partikel einen Bruchteil des Lichts als Streulicht aus seiner ursprünglichen Richtung ab. Dieses Streulicht wird dann durch einen höchst lichtempfindlichen Empfänger, den sogenannten Streulichtempfänger, aufgenommen und mittels einer nachfolgenden Auswertschaltung in seiner Intensität gemessen. Ist ein gewisser Schwellwert der Lichtintensität überschritten, wird ein Alarm ausgelöst.

Damit ein derartiges optisches System fehlerfrei und hochempfindlich arbeitet, ist sowohl eine genaue Adaption an Umgebungsvariablen, Ausführungsbesonderheiten als auch eine adäquate Signalauswertung nötig. So muss beispielsweise je nach Einbauort des Streulichtempfängers die Sensibilität des Detektors verändert werden. So ist in Reinsträumen, wie sie beispielsweise bei der Chipherstellung zu finden sind, eine sehr viel höhere Sensibilitätseinstellung des Detektors nötig als in Büroräumen, da hier schon die Existenz von geringsten Mengen an in der Luft enthaltenen Staubpartikeln und Schwebeteilchen einen Alarm auslösen muss.

Da im die von der Lichtquelle des Detektors abgestrahlte Lichtintensität in direktem Zusammenhang mit der Temperatur steht, ist es ebenfalls nötig, den Detektor mit einer Temperaturüberwachung auszubilden. Es ist vielmehr theoretisch nötig, bei steigender Temperatur die Lichtleistung der Lichtquelle, beispielsweise durch Erhöhung des Betriebsstroms, zu erhöhen. Neben den hohen Energiekosten führt dies allerdings gerade bei Laser Dioden zu einer unproportionalen Verkürzung der Lebensdauer. Auch wenn der maximale Betriebsstrom einer LD nicht erreicht ist, verringert der Betrieb an der maximalen Stromobergrenze deren Lebensdauer immens.
Generell macht die Ausbildung von hochempfindlichen optischen Streulichtdetektoren eine präzise und adaptierte Signalauswertung nötig.

Aus dem Stand der Technik ist diesbezüglich die Druckschrift EP 0 733 894 B1 bekannt, die sich mit der Temperaturadaption eines fotoelektrischen Sensors zur Detektion von Feinstpartikeln, wie beispielsweise Rauch oder Staub in der Luft, befasst. Dieser Detektor weist dabei eine Lichtquelle und ein Lichtempfangsmittel auf, dass eine Sensorausgabe auf die Feststellung einer Lichtstreuung hin erzeugt. Diese wird durch die Gegenwart von Feinstpartikeln in dem von der Lichtquelle abgestrahlten Licht hervorgerufen. Der Detektor weist dabei ein Steuerungsmittel auf, dass die Menge des von der Lichtquelle abgestrahlten Lichts auf Basis eines Temperaturmesswertes steuert. Die Lichtquelle ist dabei gepulst geschaltet. Überschreitet deren Temperatur einen bestimmten Schwellenwert, verändert das Steuerungsmittel die Zeitspanne zwischen den einzelnen Lichtimpulsen. Dadurch wird eine verstärkte Abkühlung der Lichtquelle ermöglicht. Diese Regelungsschleife wird so lange ausgeführt, bis ein oberster Schwellenwert überschritten wird, wobei dann ein Alarmsignal ausgelöst wird, da entweder eine Fehlfunktion des Detektors oder der Temperaturanstieg auf den Anstieg der Umgebungstemperatur in Folge eines Brandes zurückzuführen ist.

Der Nachteil dieser Vorrichtung liegt allerdings darin, dass durch die Vergrößerung des Abstandes zwischen den jeweiligen Lichtimpulsen, der Todbereich des Detektors vergrößert wird. Dies geht zu Lasten der Genauigkeit. Zwar löst diese Vorrichtung im wesentlichen das Problem der Abhängigkeit zwischen Temperatur und Lichtleistung der Lichtquelle, sie zeigt aber keine Möglichkeit der Änderung der Sensibilität des Detektors entgegenzuwirken, den Detektor zu Kalibrieren oder das erhaltene Streulichtsignal gemäß bestimmter Vorgaben auszuwerten.

Die Kalibrierung eines handelsüblichen Streulichtdetektors erfolgt üblicherweise mittels eines Referenzsignals. Zur sachgerechten Projektierung und Überprüfung sowie zur Demonstration von Brandmeldesystemen ist es bekannt, mit einem Verfahren zum Erzeugen von Rauchaerosolen, bei dem ein Prüfling durch Erwärmung pyrolisiert wird, Rauchversuche durchzuführen. Diese Versuche dienen dabei unter anderem der Feststellung, wo die Detektoren in einer elektronischen Anlage oder einem Raum anzuordnen sind. Um dabei eine möglichst realistische Überprüfung zu ermöglichen, werden Verfahren zum Erzeugen von Rauchaerosolen verwendet, mit deren Hilfe ein Referenzwert für eine Rauchentwicklung erzeugt werden kann, um daran die Rauchdetektoren zu überprüfen bzw. zu kalibrieren.

Das Dokument US 6,184,537 B1 offenbart einen Streulichtdetektor umfassend ein Gehäuse, das von einem Trägermedium auf einem Strömungspfad durchströmt wird. Innerhalb des Gehäuses sind ein Emitter und ein Detektor auf ein Streulichtzentrum ausgerichtet und durch entsprechende Abschirmflächen voneinander getrennt. Sobald das Trägermedium das Streulichtzentrum durchströmt, wird der vom Emitter ausgesendete Lichtstrahl an den möglicherweise im Trägermedium vorhandene Feinstpartikeln reflektiert und vom Detektor registriert.

Im Dokument US 2003/0001746 A1 ist ebenfalls ein Streulichtdetektor beschrieben, welcher ein Gehäuse mit mehreren Öffnungen aufweist, so dass ein Trägermedium über diese Öffnungen in das Gehäuse eindringen kann. Im Inneren des Gehäuses sind ebenfalls ein Emitter, beispielsweise eine LED, und ein Detektor auf ein Streulichtzentrum ausgerichtet. Wie schon bei der zuvor beschriebenen US 6,184,537 B1 durchströmt ein Trägermedium dieses Streulichtzentrum, wobei im Trägermedium vorhandene Feinstpartikeln den Lichtstrahl des Emitters reflektieren und das reflektierte Licht vom Detektor registriert wird. Zur Kalibrierung und Sensibilitätseinstellung dieses Streulichtdetektors ist ein Integrationsverstärker zur Verstärkung des Detektionssignals vorgesehen, wobei die Kalibrierung hier über die Veränderung der Integrationszeit vorgenommen werden kann.

Die deutsche Patentschrift DE 4 329 847 C1 beschreibt ein Verfahren zum Erzeugen von Rauchaerosolen zur sachgerechten Projektierung und Überprüfung sowie zur Demonstration der Effektivität von Brandmeldesystemen sowie ein Pyrolysegerät zu Durchführung dieses Verfahrens. Bei dem Verfahren wird ein Prüfling, beispielsweise ein elektrisches Kabel oder dergleichen über eine definierte Zeitspanne auf einer konstanten oder nahezu konstanten Temperatur gehalten. Die Vorrichtung und das damit verbundene Verfahren arbeitet dabei in der sogenannten Pyrolysephase, in der energiearme und unsichtbare Rauchaerosole freigesetzt werden. Der Detektionsbereich von modernen Brandfrüherkennungssystemen ist in dieser ersten Phase eines entstehenden Brandes angeordnet. Je nach Anforderungen an die Detektionsgenauigkeit muss es dann u.a. möglich sein, eine auf dieses Referenzsignal bezogene Adaption des Streulichtdetektors vorzunehmen.

Auf Grund der oben genannten Punkte stellt sich vorliegende Erfindung die Aufgabe ein Verfahren zur Auswertung eines Streulichtsignals derart weiter zu entwickeln, dass es effektiver, vielseitiger und genauer ist. Darüber hinaus stellt sich die Erfindung die Aufgabe einen Streulichtdetektor zur Durchführung des oben genannte Verfahren zu stellen, dessen Funktionsweise in Bezug auf die aus dem Stand der Technik bekannten Streulichtdetektoren genauer, vielseitiger, weniger fehleranfällig und preiswerter ist.

Diese Aufgabe wird durch ein Verfahren nach Patentanspruch 1 bzw. durch eine Vorrichtung nach Patentanspruch 12 gelöst. Insbesondere wird diese Aufgabe also durch ein Verfahren zur Auswertung eines Streulichtsignals, welches von einem Streulichtempfänger beim Detektieren von insbesondere feinen Partikeln in einem Trägermedium erzeugt wird, gelöst, wobei das Streulichtsignal eine Filteralgorithmusstufe zur Auswertung des Streulichtsignals in Abhängigkeit bestimmter Filteralgorithmen durchläuft, und das Streulichtsignal in der Filteralgorithmusstufe vor dem Vergleich mit voreingestellten Schwellwerten in Abhängigkeit seiner Steilheit unterschiedlich gefiltert wird.

Insbesondere wird diese Aufgabe auch durch einen Streulichtdetektor gelöst, der aufweist: ein Gehäuse, mit einer Einlassöffnung und einer Auslassöffnung in dem Gehäuse, zwischen denen das Trägermedium das Gehäuse auf einem Strömungspfad durchströmt, mit einer Lichtquelle, die Licht auf ein auf dem Strömungspfad liegendes Streulichtzentrum richtet, mit einem Streulichtempfänger für einen Teil des im Streulichtzentrum an Partikeln gestreuten Lichts, und mit einem Streulichtsignalverstärker zum Verstärken des Streulichtsignals, wobei der Streulichtverstärker als Integrationsverstärker ausgebildet ist und wobei der Streulichtdetektor ferner eine Filteralgorithmusstufe zur Filterung des Streulichtsignals in Abhängigkeit seiner Steilheit aufweist.

Ein wesentlicher Punkt der Erfindung liegt darin, dass durch das Durchlaufen der verschiedenen Kalibrierungs- und Kompensationsstufen eine genaue Anpassung des Streulichtsignals möglich ist. Je nach Erfordernissen der Streulichtsignaldetektion, der Genauigkeit und der vorliegenden Umgebungsvariablen ist es also möglich, den Streulichtdetektor derart zu adaptieren, dass eine genaue und fehlerfreie Streulichtdetektion möglich ist.

### In den einzelnen der oben genannten Stufen werden dabei folgende Anpassung durchgeführt:

In der Kalibrierstufe wird der Streulichtdetektor anhand eines Referenzsignals geeicht. Durch diese Anpassung wird u.a. den jeweiligen Umgebungsbedingungen Rechnung getragen, da je nach Einbauort das Trägermedium unter Normalbetrieb einen anderen "Grundverschmutzungsgrad" aufweisen kann.

In der Driftkompensationsstufe erfolgt die oben genannte Kalibrierung über einen längeren Zeitraum, dass heisst meist 2 bis 3 Tage. Die Mittelung des Kammerwertes zu einem nachgeführten Kammerwert, wobei der Kammerwert das Streulichtsignal ist, das vom Streulichtdetektor empfangen wird, wenn kein Rauch oder Rauchaerosol im Streulichtzentrum vorhanden ist, verbessert dabei die Genauigkeit des Streulichtdetektors, da dessen Sensibilitätseinstellung unter Berücksichtigung dieses Mittelwertes erfolgen kann.

Die Temperaturkompensationsstufe dient der Adaption des Streulichtdetektors auf das Abhängigkeitsverhältnis Temperatur und Lichtabstrahlleistung. Hier wird der Tatsache Rechnung getragen, das bei steigender Temperatur die tatsächlich von einer Lichtquelle emittierte Lichtleistung abnimmt und umgekehrt.

Die Sensibilitätseinstellungsstufe ermöglicht die Anpassung des Streulichtdetektors an geforderte Sensibilitätsstufen, wie sie je nach Anwendungsgebiet des Detektors erforderlich sind.

Die Filteralgorithmusstufe schließlich ermöglicht die Analyse eines Streulichtsignals in Abhängigkeit bestimmter Filteralgorithmen, um eine sichere und fehlerfreie Alarmausgabe zu gewährleisten.

Eine derartige Kombination unterschiedlicher Adaptions- und Kalibrierungsstufen führt zu einem Detektionsverfahren, dass äußerst präzise, vielseitig anwendbar und darüber hinaus besonders fehlerfrei arbeitet. Natürlich ist es denkbar die ein oder andere Adaptionsstufe wegzulassen, wenn sie nicht ausdrücklich nötig ist, um Kosten zu sparen.

Ein Verfahren zur Auswertung eines Streulichtsignals, wobei der Streulichtdetektor einen Integrationsverstärker als Streulichtsignalverstärker aufweist, in dem in der Kalibrierungsstufe die Integrationszeit des Integrationsverstärkers so eingestellt wird, dass das Streulichtsignal einem Referenzsignal eines Referenzmelders entspricht ist eine vorteilhafte Weiterbildung des eingangsgenannten Verfahrens. Durch die Veränderung der Integrationszeit ist eine sehr kostengünstige und automatisierbare Adaption des Streulichtdetektors an ein Referenzsignal möglich. Es ist u.a. auch möglich diese Adaption durch eine Anpassung des Treiberstroms der Lichtquelle vorzunehmen - so dass die abgestrahlte Lichtenergie verändert wird -, was allerdings zu Lasten der Lebensdauer der Lichtquelle und einem erhöhten Energiebedarf erfolgt. Bei diesem erfindungsgemäßen Verfahren bleibt der Treiberstrom der Lichtquelle konstant.

Die Sensibilität eines Streulichtdetektors kann erfindungsgemäß durch verschiedene Verfahren verändert werden. Zum einen durch die Änderung der Impulsbreite des Treiberstroms der Lichtquelle. Unter Impulsbreite versteht man dabei die Dauer eines Lichtimpulses. Durch Verringerung der Impulsbreite wird die Sensibilität des Streulichtdetektors verringert, durch Vergrößerung der Impulsbreite wird die Sensibilität heraufgesetzt. Die andere Möglichkeit ist die Veränderung der Integrationszeit eines eventuell vorhandenen Integrationsverstärkers, der als Streulichtsignalverstärker fungiert. Auch bei diesem Verfahren führt die Vergrößerung der Integrationszeit des Integrationsverstärkers zu einer höheren Sensibilität und die Verringerung der Integrationszeit zu einem Streulichtdetektor mit weniger empfindlichem Ansprechverhalten. Beide Verfahren zur Veränderung der Sensibilität eines Streulichtdetektors sind sehr kostengünstig und Material schonend und erlauben beispielsweise auf einfache Weise eine Anpassung des Streulichtdetektors an veränderte. Dabei ist es natürlich möglich das sowohl die Änderung der Integrationszeit als auch die Änderung der Impulsbreite stufenweise oder stufenlos erfolgt. Stufenweise, bedeutet hier beispielsweise eine feststehende Rasterung der Sensibilität in Prozentstritten, so dass der Streulichtdetektor auf 25, 50, 75 und 100 % Sensibilität arbeitet. Die Einstellung dieser Sensibilitätsstufen erfolgt vorteilhafter Weise mittels Schaltmittel, z. B. einem DIL-Schalter. Es ist natürlich auch möglich die Anpassung der Sensibilität über eine Kommunikationsschnittstelle, beispielsweise mittels eines PC oder in einem Netzwerk, durchzuführen. Auf diese Art und Weise ist eine Anpassung von Streulichtdetektoren bzw. eine Anpassung von gesamten Brandmeldeanlagen über eine Steuerungszentrale möglich.

Ob das Verfahren eine stufenweise oder stufenlose Anpassung der Integrationszeit oder der Impulsbreite erlaubt, hängt von den Randbedingungen der Überwachungsanlage ab. Um eine besonders effektive und sensible Überwachung zu gewährleisten, wie dies beispielsweise in Reinsträumen nötig ist, müssen Streulichtdetektoren schon bei der Gegenwart geringster Partikelmengen in der Luft ein Detektionssignal liefern, was demzufolge eine sehr feine Sensibilitätsanpassung nötig macht. Die Anpassung der Sensibilität kann neben herkömmlichen Schaltern oder mittels Kommunikationsschnittstellen für PC oder Netzwerke natürlich auch drahtlos folgen.

Der Zusammenhang zwischen Temperatur und Lichtemission der Lichtquelle ist eingangs schon näher beschrieben worden. In der Temperaturkompensationsstufe wird daher ein im Strömungspfad des Trägermediums angeordneter Temperatursensor zur Temperaturkompensation des Streulichtsignals verwendet. Das bedeutet, dass kontinuierlich oder gepulst die Temperatur des Trägermediums bzw. der Umgebung ermittelt wird, um eine Adaption der Lichtquelle, die im Streulichtdetektor Licht emittiert, vorzunehmen. Wird also ein Temperaturanstieg beim Trägermedium im Strömungspfad festgestellt, kann eine direkte Anpassung der Lichtquelle erfolgen, um eine konstante Lichtabstrahlung zu gewährleisten. Vorteilhafterweise wird diese Temperaturkompensation durch die Änderung der Impulsbreite des Treiberstroms der dem Streulichtempfänger zugeordneten Lichtquelle vorgenommen. Das bedeutet, dass bei einem vom Temperatursensor erfassten Temperaturanstieg des Trägermediums, die Impulsbreite des Treiberstroms der Lichtquelle verringert wird. Das hat eine geringere Erhitzung der Lichtquelle und somit auch des Trägermediums zur Folge. Wird statt dessen ein Temperaturabfall festgestellt, kann die Impulsbreite des Treiberstroms der Lichtquelle vergrößert werden, was eine Temperaturerhöhung nach sich zieht. In allen Fällen bleibt jedoch der Treiberstrom der Lichtquelle konstant.

Es ist von Vorteil, das Streulichtsignal vor dem Vergleich mit voreingestellten Schwellwerten, insbesondere Alarmschwellwerten, in Abhängigkeit seiner Steilheit unterschiedlich zu filtern. Auf diese Art und Weise können Täuschungsgrößen erkannt, eliminiert und eine Fehlalarmierung verhindert werden, da nur tatsächlich vorhandene Alarmgrößen, das sind Größen die über einem betreffenden Schwellwert liegen zu einem Alarmausgangssignal führen. Dabei wird beispielsweise berücksichtigt über welchen Zeitraum das Streulichtsignal einen Schwellenwert, insbesondere Alarmschwellenwert überschreitet. Erst ab einer festgelegten Zeitspanne erfolgt dann die Ausgabe eines Alarmsignals. Die Tiefpassfilterung des Eingangssignals sobald dessen Steilheit einen vordefinierten Schwellwert überschreitet führt darüber hinaus zu einer Streulichtdetektorvorrichtung mit einer sehr guten Signal-to-noise-ratio, da kurze, schnelle Ausschläge im Eingangssignal, wie sie häufig durch Luftverunreinigungen, d.h. geringe Mengen an Staubpartikeln im zu überwachenden Luftstrom, verursacht werden, nicht als Alarmwerte erkannt werden.

Eine weitere Möglichkeit bei einem Streulichtdetektor einen verbesserten Detektionsalgorithmus und weniger Fehlalarmierungen zu erlangen, ist die Bildung eines nachgeführten Kammerwertes. Dieser nachgeführte Kammerwert wird über einen längeren Zeitraum aus dem Kammerwert des Streulichtdetektors gemittelt. Die erfolgt in der Driftkompensationsstufe. Der Kammerwert ist das Streulichtsignal, dass sich ergibt, wenn kein Rauch im Streulichtzentrum des Streulichtdetektors vorhanden ist. Dieses Streulichtsignal bildet sich dabei vorzugsweise sowohl an Eigenrefflektionsflächen des Detektors als auch auf Grund von Luftverunreinigungen aus. Die Mittelung dieses Kammerwertes in der Driftkompensationsstufe über mehrere, d. h. vorzugsweise 2 bis 3 Tage, führt also zu einer sehr genauen Eichung des Gerätes. Dieser gemittelte nachgeführte Kammerwert kann dann unter Betriebsbedingungen vom Streulichtsignal abgezogen werden. Man erhält somit ein Streulichtsignal ohne Fehler aus Luftverunreinigungen, Umgebungsbedingungen bzw. Eigenrefflektionswerten des Detektors usw..

Zur Durchführung der oben genannten Verfahrensschritte wird ein Streulichtdetektor dargeboten, mit einem Gehäuse, mit einer Einlassöffnung und einer Auslassöffnung in dem Gehäuse, zwischen denen das Trägermedium das Gehäuse auf einem Strömungspfad durchströmt, mit einer Lichtquelle, die Licht auf ein auf dem Strömungspfad liegendes Streulichtzentrum richtet, mit einem Streulichtempfänger für einen Teil des im Streulichtzentrum an Partikeln gestreuten Lichts, und mit einem Streulichtsignalverstärker zum Verstärken des Streulichtsignals, wobei der Streulichtsignalverstärker als Integrationsverstärker ausgebildet ist. Die Verstärkung des Streulichtsignals hat natürlich den Vorteil, dass schon geringe Streulichtsignaländerungen detektiert werden können, wobei die Ausbildung des Streulichtsignalverstärkers als Integrationsverstärker die Anpassung der Streulichtdetektion ohne die Verwendung zusätzlicher Bauteile ermöglicht. Bezüglich des Punktes Temperaturkompensation, ermöglicht es der Integrationsverstärker durch die Verlängerung der Beobachtungszeiträume - also der Integrationszeit - die, bei einem Temperaturanstieg im Streulichtdetektor nachlassende Lichtleistung der Lichtquelle zu kompensieren. Diese Möglichkeit ist zum einen preisgünstig, zum andern verlängert sie die Lebensdauer der Lichtquelle, da deren Lichtabstrahlleistung nicht durch einen vergrößerten Treiberstrom erzeugt werden muss. Folglich führt die Verwendung des Integrationsverstärkers als Streulichtverstärker bei einem Streulichtdetektor zu einer Vorrichtung, die sehr energieeffizient arbeitet.

Um eine Sensibilitätseinstellung am Streulichtempfängers vorzunehmen, sind vorzugsweise am Streulichtdetektor Schaltmittel vorgesehen. Um ein möglichst einfaches Umschalten am Gerät zu ermöglichen können diese Schaltmittel beispielsweise DIL-Schalter sein.

Es ist jedoch auch möglich diese Schaltmittel als preisgünstige Jumperverbindungen auszuführen. Um die Anwenderfreundlichkeit und die Uberwachungsmöglichkeiten zu erhöhen, ist es sinnvoll eine Kommunikationsschnittstelle, insbesondere zu einem PC oder einem Netzwerk vorzusehen. Dies erlaubt die zentralisierte Überwachung mehrerer Streulichtdetektoren bzw. deren Fehlerdiagnose. Dabei können die Kommunikationswege sowohl drahtlos als auch drahtgebunden zur Verfügung gestellt werden. Ebenfalls sinnvoll ist es daher einen Schalteingang zum Umschalten der Sensibilität des Streulichtempfängers vorzusehen.

Die Anordnung eines Temperatursensors im Strömungspfad des Trägermediums ermöglicht die eingangsgenannte Temperaturkompensation. Die Anordnung eines Strömungsmessers im Strömungspfad des Trägermediums, ermöglicht die zusätzliche Überwachung des Strömungsdetektors. Beispielsweise ist es nun möglich bei Detektion von starken Strömungsschwankungen ein Signal auszugeben; da diese auf eine Fehlfunktion des Detektors bzw. der Ansaugvorrichtung schließen lassen. Die Ausbildung des Luftstromsensors und/oder des Temperatursensors als thermoelektrische Bauteile stellt dabei eine kostengünstige und größenoptimierte Möglichkeit dar, den Streulichtdetektor mit hoch präzise arbeitenden Sensoren zu versehen.

Weitere Ausführungsformen der Erfindung ergeben sich aus den Unteransprüchen.

Nachfolgend wird die Erfindung anhand von Ausführungsbeispielen beschrieben, die durch die Abbildungen näher erläutert werden. Hierbei zeigen:
- Fig. 1: Eine geschnittene Seitenansicht eines Streulichtdetektors einer ersten Ausführungsform;
- Fig. 2: Eine Draufsicht auf den entlang der Linie A-A geschnittenen Streulichtdetektor der Ausführungsform aus Fig. 1
- Fig. 3: Eine Draufsicht auf einen geschnittenen Streulichtdetektor einer zweiten Ausführungsform;
- Fig. 4: Eine Draufsicht auf einen geschnittenen Streulichtdetektor einer dritten Ausführungsform.
- Fig. 5: Ein Eingangs-/Ausgangssignaldiagramm eines Streulichtdetektors;
- Fig. 6: Ein Diagramm, dass die Veränderung der Impulsbreite des Treiberstroms einer Lichtquelle in Abhängigkeit der Temperatur darstellt.

In der nachfolgenden Beschreibung werden für gleiche und gleichwirkende Teile die selben Bezugsziffern verwendet.

Die im Folgenden beschriebenen drei Ausführungsbeispiele für einen Streulichtdetektor 1 sind darauf ausgerichtet, als Teil einer aspirativen Brandmeldeanlage zu dienen. Somit ist das in den Patentansprüchen beschriebene Trägermedium Luft. Diese Luft wird wie bei einer aspirativen Brandmeldeanlage üblich, mittels eines Lüfters angesaugt. Dabei ist es denkbar den Lüfter direkt am Gehäuse 10 des Streulichtdetektors 1 anzuordnen oder aber auch innerhalb eines Luftkanalsystems vom Streulichtdetektor 1 entfernt anzubringen. Die in den Patentansprüchen formulierten Verfahren und Vorrichtungen sind in den folgenden drei Ausführungsformen implementiert bzw. verwendet.

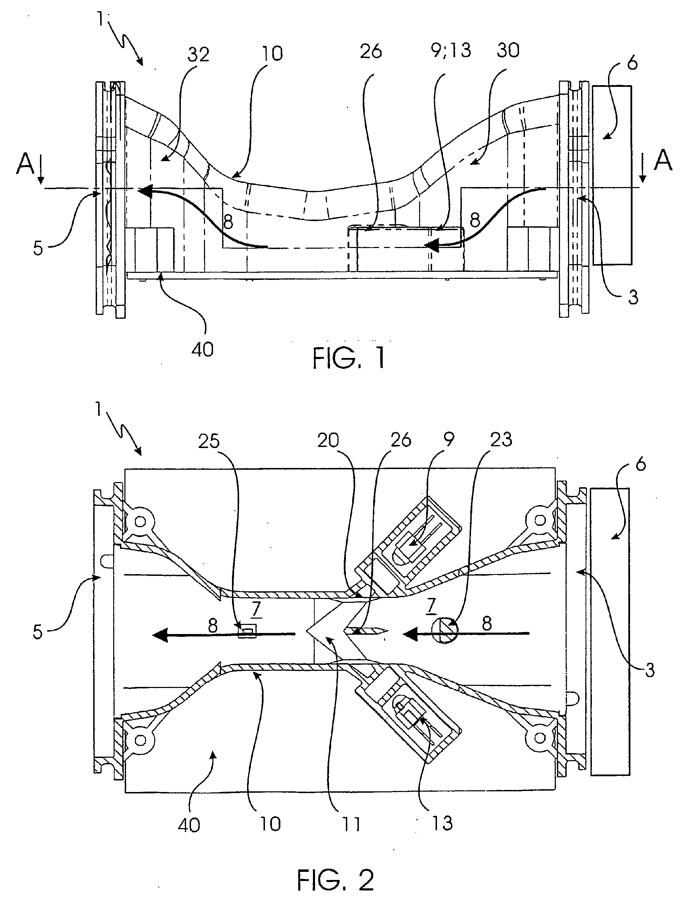

Fig. 1 zeigt eine geschnittenen Seitenansicht eines Streulichtdetektors. Dieser umfasst ein Gehäuse 10 und damit verbunden eine Platine 40. Das Gehäuse 10 bildet dabei eine Einlassöffnung 3 und eine Auslassöffnung 5 aus. An die Einlassöffnung 3 ist ein Lüftergehäuse 6 angebunden, dass einen Lüfter enthält (nicht dargestellt) der für einen Luftstrom 8 sorgt, der den Detektor 1 entlang einem Strömungspfad 7 durchströmt. In diesem Fall wird ein Luftstrom 8 erzeugt, der den Streulichtdetektor 1 von der Einlassöffnung 3 zur Auslassöffnung 5 durchströmt. Es ist natürlich auch denkbar, dass der im Lüftergehäuse 6 vorgesehene Lüfter die Luft ansaugt und somit ein Luftstrom 8' erzeugt wird der in entgegengesetzter Richtung den Streulichtdetektor 1 durchströmt. Um den Einfall von Fremdlicht von außen zu vermeiden, weist der Streulichtdetektor 1 auf beiden Seiten Lichtfallen 30; 32 auf. Weiter ist der Streulichtdetektor 1 mit einer Lichtquelle 9 ausgestattet die einen Lichtkegel 20 auf ein Streulichtzentrum 11 richtet, welches auf dem Strömungspfad 7 liegt. Des weiteren umfasst der Detektor 1 einen Empfänger 13 in Form einer Fotodiode. Des weiteren ist eine Blende 26 zwischen Leuchtdiode 9 und Streulichtempfänger 13 vorgesehen, die verhindert, dass das von der Lichtquelle 9 ausgestrahlte Licht direkt auf den Streulichtempfänger 13 trifft.

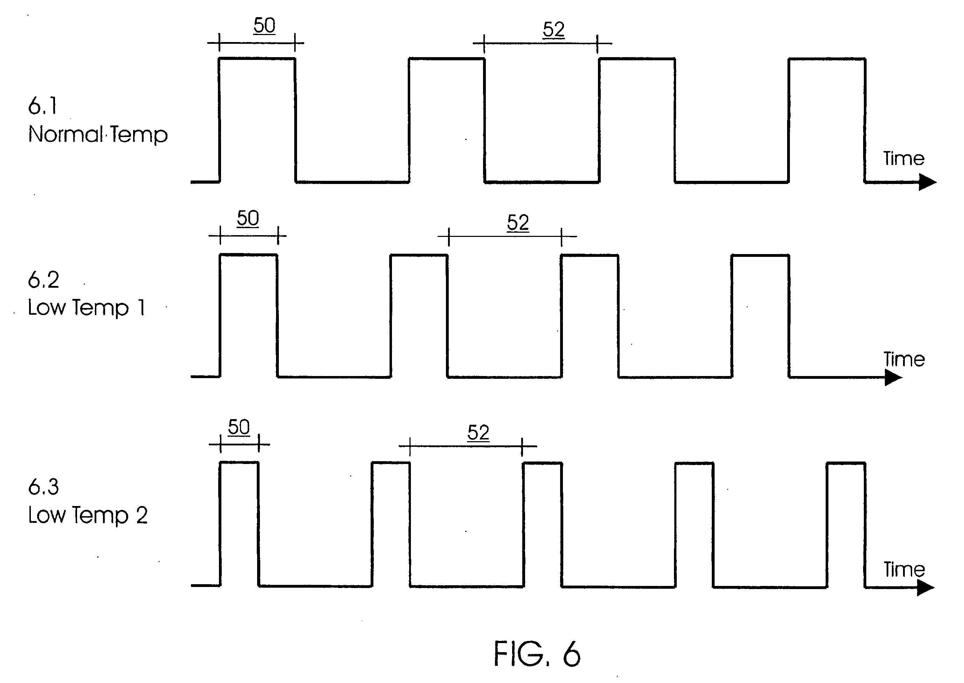

In Fig. 2 ist das erste Ausführungsbeispiel aus Fig. 1 in einer geschnittenen Draufsicht dargestellt. Die Schnittführung entspricht dabei der in Fig. 1 dargestellten Schnittlinie A-A. Luft, die den Streulichtdetektor 1 von der Einlassöffnung 3 zur Auslassöffnung 5 durchströmt, passiert dabei das Streulichtzentrum 11. Eventuell im Luftstrom 8 vorhandene Kleinstpartikel reflektieren dabei das von der Lichtquelle 9, in diesem Fall einer LED, emittierte Licht auf den Streulichtempfänger 13, was dann nach überschreiten vorher festgelegter Schwellenwerte ein Detektionssignal bewirkt. Im Strömungspfad 7 des Streulichtdetektors 1 ist zusätzlich ein Luftstromsensor 25 und ein Temperatursensor 23 angeordnet. Der Luftstromsensor 25 dient dabei der Überprüfung ob ein kontinuierlicher oder sonst irgendwie bestimmter Luftstrom 8 den Streulichtdetektor 1 durchströmt. Bei Luftstromschwankungen ist es beispielsweise möglich, ein dementsprechendes Alarmsignal auszugeben. Der Temperatursensor 23 überwacht die Temperatur im Luftstrom 8, der den Streulichtdetektor 1 entlang des Strömungspfades 7 durchströmt, um beispielsweise eine Temperaturkompensation zu ermöglichen. Auf die Temperaturkompensation wird in Fig. 6 noch näher eingegangen.

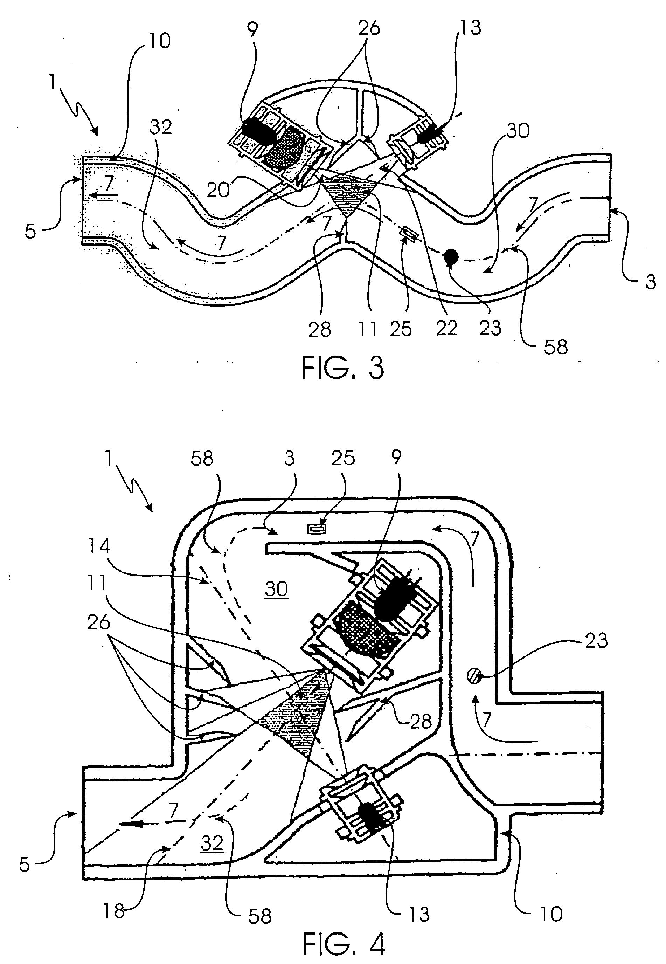

Die Figuren 3 und 4 zeigen beide eine geschnittene Draufsicht auf je einen weiteren Streulichtdetektor. Diese beiden Ausführungsformen sind als Ausführungsform zwei und drei bezeichnet. Der hier dargestellte geschnittene Streulichtdetektor weist wiederum die Lichtquelle 9 und den Empfänger 13, wobei der Lichtkegel 20 der Lichtquelle 9 und ein Empfängerkegel 22 des Streulichtempfängers 13 überkreuz (wie beim ersten Ausführungsbeispiel) und für einen bestimmten Abschnitt auf der Mittellinie 58 des Strömungspfades 7 verlaufen. Der den Strömungspfad 7 leitende Strömungskanal weist dabei sowohl vor dem Streulichtzentrum 11 als auch hinter dem Streulichtzentrum 11 eine Biegung auf. Die so gebildeten Lichtfallen 30 und 32 verhindern, wie schon beim ersten Ausführungsbeispiel, das Eindringen von Fremdlicht von außen. Darüber hinaus weist die zweite Ausführungsform in Fig. 3 Blenden 26 und 28 auf, die die Reflektion des von der Lichtquelle 9 emittierten Lichts direkt in den Streulichtempfänger 13 verhindern. Ein Temperatursensor 23 und ein Luftstromsensor 25 sind hier ebenfalls auf der Mittellinie 58 des Strömungspfades 7 angeordnet, um die für die Detektion relevanten Kalibrierungs- und Überwachungsdaten zu sammeln.

Die in Fig. 4 gezeigte dritte Ausführungsform eines Streulichtdetektors weist wie die zuvor gezeigten Ausführungsformen Lichtfallen 30 und 32 auf. Die Lichtquelle 9 bzw. der Empfänger 13 sind mit ihren Mittelachsen 18 bzw. 14 so ausgerichtet, dass diese für einen bestimmten Abschnitt - nämlich bis zu den beiden Biegungen 30;32 des Strömungspfades 7 - parallel zu oder auf der Mittellinie 58 des Strömungspfades 7 verlaufen. Wiederrum sind bei dieser Ausführungsform Blenden 26 und 28 vorgesehen, die die Detektion von Fehlgrößen verhindern. Im Bereich der Einlassöffnung 3 sind in dem dort ausgebildeten Strömungskanal ebenfalls wieder ein Luftstromsensor 25 und ein Temperatursensor 23 angeordnet. Ein Luftstrom 8, der den Streulichtdetektor 1 durchströmt, wird so vor Erreichen des Streulichtzentrum 11 auf seine Temperatur und seine Strömungsgeschwindigkeit überprüft.

Die Verfahrensschritte wie sie in den vorliegenden Patentansprüchen beschrieben sind, finden in den vorgehend beschriebenen Streulichtdetektoren 1 ihre Anwendung. Dabei ist es möglich, dass das von dem Streulichtempfänger 13 empfangene Streulichtsignal in beliebiger Reihenfolge eine Kalibrierstufe, Driftkompensationsstufe, eine Temperaturkompensationsstufe, eine Sensibilitätseinstellungsstufe oder eine Filteralgorithmusstufe durchläuft. Die Kalibrierstufe und die Driftkompensationsstufe dienen dabei der Adaption des jeweiligen Streulichtempfängers, u.a. an unterschiedliche Trägermedien, die den Strömungsdetektor durchströmen, wobei zur Kalibrierung von einem Luftstrom 8 auszugehen ist, wie er am jeweiligen Einsatzort unter Normalbedingungen vorzufinden ist. Natürlich muss ein Streulichtdetektor der in Büroräumen verwendet wird auf einen anderen Luftstrom 8 kalibriert werden als ein Streulichtdetektor, der in Reinsträumen verwendet wird. In der Kalibrierungsstufe und/oder der Driftkompensationsstufe wird dem Rechnung getragen. Der Unterschied zwischen beiden Stufen ist, dass bei der Driftkompensationsstufe der sogenannte Kammerwert, das Streulichtsignal das vom Streulichtempfänger 13 detektiert wird wenn kein Rauch oder ähnliche Fremdstoffe, die einen Alarm auslösen könnten, im Streulichtzentrum 11 vorhanden ist, über einen längeren Zeitraum, dass bedeutet meist zwei bis drei Tage, gemittelt wird. Dieser sogenannte nachgeführte Kammerwert wird dann um eine Kalibrierung des Streulichtdetektors 1 zu erreichen vom detektierten Streulichtsignal abgezogen. Eine Anpassung an die Temperatur des Luftstroms 8 ist in Folge des vom Temperatursensor 23 empfangenen Temperatursignals möglich. Hier wird wie Eingangs erwähnt, der Tatsache Rechnung getragen, dass bei steigender Temperatur die von der Lichtquelle 9 emittierte Lichtleistung nachlässt. Um nun eine, von der Temperatur unabhängige, Detektionsleistung des Streulichtdetektors 1 zu erzielen, wird in der Temperaturkompensationsstufe eine dementsprechende Anpassung vorgenommen. Das bei den verschiedenen Ausführungsformen vom Streulichtempfänger 13 detektierte Streulichtsignal wird darüber hinaus in einer Filteralgorithmusstufe unterschiedlich gefiltert. Dabei ist es denkbar das Streulichtsignal vor dem Vergleich mit den voreingestellten Schwellenwerten, die zu einem Alarmsignal führen, in Abhängigkeit seiner Steilheit zu filtern um eventuell vorhandene Fehlsignale zu eliminieren.

Um bei allen drei Streulichtdetektoren eine möglichst genaue und sensible Überwachung des Luftstroms 8 zu gewährleisten, sind die verschiedenen Ausführungsbeispiele mit einem Streulichtverstärker versehen (nicht dargestellt), der beispielsweise in Form eines Integrationsverstärkers das vom Streulichtempfänger 13 detektierte Streulichtsignal verstärkt. Dieser Integrationsverstärker ermöglicht dabei beispielsweise durch die Veränderung der Integrationszeit eine Veränderung der Sensibilität des Streulichtempfängers 1. Je größer die Integrationszeit dabei gewählt ist, desto sensibler arbeitet der Streulichtdetektor 1. Diese Änderung kann dabei stufenweise oder stufenlos erfolgen.

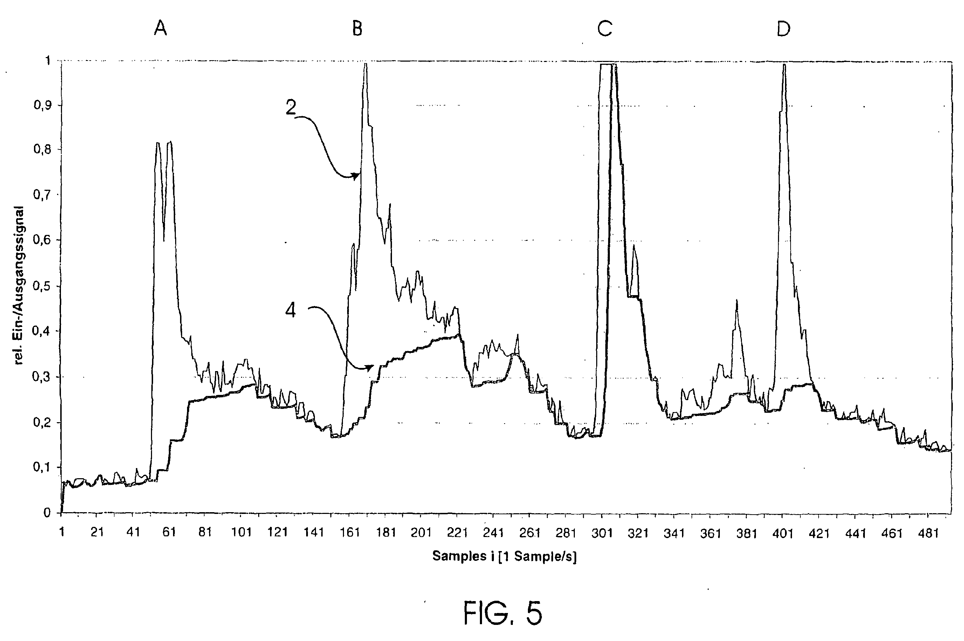

Fig. 5 zeigt ein Signaleingangs/-Ausgangsdiagramm. Das Eingangssignal 2 entspricht dabei einem ungefilterten Signal, wie es vom Streulichtempfänger 13 im Streulichtdetektor 1 detektiert wird. Das Ausgangssignal 4 entspricht dagegen einem bereits unter Verwendung spezieller Filteralgorithmen veränderten Signal. Zu Erkennen sind hier im Eingangssignal 2 vier Spitzenwerte A, B, C, D, wobei nur der Spitzenwert C über einen längeren Zeitraum den Schwellenwert "1" überschreitet, wodurch ein Alarm bzw. ein Detektionssignal ausgelöst wird. Die sogenannten Täuschungsgrößen A, B und D werden dagegen vom Filteralgorithmus gekappt und führen nicht zu einem Alarmsignal. Dabei ist zu beachten dass die Täuschungsgrößen B und D zwar auch den Schwellenwert "1" überschreiten, diese Überschreitung allerdings nicht lange genug vorliegt und so vom internen Filter nicht als Alarmgröße erkannt und somit gekappt wird. Durch eine angepasste Filteraufstellung kann so ein Streulichtdetektor optimal an Umgebungsbedingungen o.ä. abgestimmt werden.

In Fig. 6 ist eine Möglichkeit für die Temperaturkompensation der drei Strömungsdetektoren aus den Figuren 1 bis 3 dargestellt. Gezeigt ist dabei zum einen in Bild 6.1 ein Diagramm des gepulsten Betriebs der Lichtquelle 9. Unter Normalbetrieb weist dies eine Impulsphase 50 mit einer Impulsbreite von beispielsweise drei Milisekunden, gefolgt von einer Ruhephase 52 von einer Sekunde auf. In dieser Ruhephase 52 kühlt sich die, während der Impulsphase 50 erwärmte Lichtquelle 9 ab, so dass unter Normalbedingungen eine gleichmäßige Temperaturentwicklung im Luftstromkanal zu erwarten ist. Wird allerdings vom Luftstromsensor 25 eine Temperaturerhöhung festgestellt, ist es möglich, wie dies in den Figuren 6.2 und 6.3 dargestellt ist, die Impulsbreite der Impulsphase 50 sukzessive zu verringern, um eine geringere Wärmeentwicklung der Lichtquelle 9 zu bewirken. Die Veränderung der Impulsbreite der Lichtemittierung - diese entspricht einer Änderung der Impulsbreite des Treiberstroms der Lichtquelle 9, bewirkt natürlich auch eine Verringerung der Sensibilität, die folglich in der Sensibilitätseinstellungsstufe oder einer anderen Kalibrierungsstufe kompensiert werden kann.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichenliste

- 1: Detektor
- 2: Eingangssignal
- 3: Einlassöffnung
- 4: Ausgangssignal
- 5: Auslassöffnung
- 6: Lüftergehäuse
- 7: Strömungspfad
- 8: Luftstrom
- 9: Lichtquelle
- 10: Gehäuse
- 11: Streulichtzentrum
- 13: Streulichtempfänger
- 14: Mittelachse
- 17: Streulichtsignalverstärker
- 18: Mittelachse
- 19: Schaltmittel
- 20: Lichtkegel
- 21: Schaltmittel
- 22: Empfängerkegel
- 23: Temperatursensor
- 25: Strömungsmesser
- 26: Blende
- 28: Blende
- 30: Lichtfalle
- 32: Lichtfalle
- 40: Platine
- 50: Impulsphase
- 52: Ruhephase
- 58: Mittellinie des Strömungspfades

## Patentansprüche

1. Verfahren zur Auswertung eines Streulichtsignals, welches von einem Streulichtempfänger beim Detektieren von insbesondere feinen Partikeln in einem Trägermedium erzeugt wird,
**dadurch gekennzeichnet, dass**
das Streulichtsignal eine Filteralgorithmusstufe zur Auswertung des Streulichtsignals in Abhängigkeit bestimmter Filteralgorithmen durchläuft, und das Streulichtsignal in der Filteralgorithmusstufe vor dem Vergleich mit voreingestellten Schwellwerten in Abhängigkeit seiner Steilheit unterschiedlich gefiltert wird.

2. Verfahren nach Anspruch 1,
**dadurch gekennzeichnet, dass**
das Streulichtsignal weiter eine Kalibrierstufe zur Eichung anhand eines Referenzsignals, und/oder eine Driftkompensationsstufe zur Anpassung an vorhandene Umgebungsbedingungen über einen Zeitraum von mindestens 24 Stunden, und/oder eine Temperaturkompensationsstufe zur Kompensation der Temperaturabhängigkeit der Lichtabstrahlleistung einer Lichtquelle, und/oder eine Sensibilitätseinstellungsstufe zur Anpassung einer geforderten Sensibilität durchläuft.

3. Verfahren nach Anspruch 2, mit einem Integrationsverstärker als Streulichtsignalverstärker,
**dadurch gekennzeichnet, dass**
in der Kalibrierstufe die Integrationszeit des Integrationsverstärkers so eingestellt wird, dass das Streulichtsignal einem Referenzsignal eines Referenzmelders entspricht.

4. Verfahren nach Anspruch 2 oder 3,
**dadurch gekennzeichnet, dass**
in der Sensibilitätseinstellungsstufe die Sensibilität des Streulichtempfängers (13) durch Änderung der Impulsbreite des Treiberstroms einer dem Streulichtempfänger (13) zugeordneten Lichtquelle (9) erfolgt.

5. Verfahren nach Anspruch 2 oder 3,
**dadurch gekennzeichnet, dass**
in der Sensibilitätseinstellungsstufe die Sensibilität des Streulichtempfängers durch Änderung der Integrationszeit eines als Streulichtsignalverstärker fungierenden Integrationsverstärkers erfolgt.

6. Verfahren nach Anspruch 5,
**dadurch gekennzeichnet, dass**
die Änderung der Integrationszeit stufenweise oder stufenlos erfolgt.

7. Verfahren nach Anspruch 4,
**dadurch gekennzeichnet, dass**
die Änderung der Impulsbreite stufenweise oder stufenlos erfolgt.

8. Verfahren nach einem der Ansprüche 2 bis 7,
**dadurch gekennzeichnet, dass**
in der Temperaturkompensationsstufe ein im Strömungspfad (7) des Trägermediums angeordneter Temperatursensor (23) zur Temperaturkompensation des Streulichtsignals verwendet wird.

9. Verfahren nach Anspruch 8,
**dadurch gekennzeichnet, dass**
die Temperaturkompensation durch Änderung der Impulsbreite des Treiberstroms einer dem Streulichtempfänger (13) zugeordneten Lichtquelle (9) erfolgt.

10. Verfahren nach einem der Ansprüche 2 bis 9,
**dadurch gekennzeichnet, dass**
das Streulichtsignal tiefpass-gefiltert wird, wenn dessen Steilheit einen vordefinierten Schwellwert überschreitet.

11. Verfahren nach einem der Ansprüche 2 bis 10,
**dadurch gekennzeichnet, dass**
in der Driftkompensationsstufe über einen längeren Zeitraum ein Kammerwert zur Bildung eines nachgeführten Kammerwertes gemittelt wird.

12. Streulichtdetektor zur Durchführung des Verfahrens nach einem der Ansprüche 1 bis 11, mit
einem Gehäuse (1), mit einer Einlassöffnung (3) und einer Auslassöffnung (5) in dem Gehäuse (1), zwischen denen das Trägermedium das Gehäuse (1) auf einem Strömungspfad (7) durchströmt, mit einer Lichtquelle (9), die Licht auf ein auf dem Strömungspfad (7) liegendes Streulichtzentrum (11) richtet, mit einem Streulichtempfänger (13) für einen Teil des im Streulichtzentrum (11) an Partikeln gestreuten Lichts, und mit einem Streulichtsignalverstärker (17) zum Verstärken des Streulichtsignals, wobei
der Streulichtsignalverstärker (17) als Integrationsverstärker ausgebildet ist,
**gekennzeichnet durch**
eine Filteralgorithmusstufe zur Filterung des Streulichtsignals in Abhängigkeit seiner Steilheit.

13. Streulichtdetektor nach Anspruch 12,
**dadurch gekennzeichnet, dass**
Schaltmittel (19, 21) zum Einstellen der Sensibilität des Streulichtempfängers (13) vorgesehen sind.

14. Streulichtdetektor nach Anspruch 12 oder 13,
**dadurch gekennzeichnet, dass**
eine Kommunikationsschnittstelle, insbesondere zu einem PC oder einem Netzwerk, vorgesehen ist.

15. Streulichtdetektor nach einem der Ansprüche 12 bis 14,
**dadurch gekennzeichnet, dass**
ein Schalteingang zum Umschalten der Sensibilität des Streulichtempfängers (13) vorgesehen ist.

16. Streulichtdetektor nach einem der Ansprüche 12 bis 15,
**gekennzeichnet durch**
einen Temperatursensor (23) im Strömungspfad (7) des Trägermediums.

17. Streulichtdetektor nach einem der Ansprüche 12 bis 16,
**gekennzeichnet durch**
einen im Strömungspfad (7) des Trägermediums angeordneten Strömungsmesser (25).

18. Streulichtdetektor nach Anspruch 17,
**dadurch gekennzeichnet, dass**
der Strömungsmesser (25) aus einem thermoelektrischen Luftstromsensor und einem thermoelektrischen Temperatursensor besteht.

## Claims

1. A method for evaluating a scattered light signal generated by a scattered light receiver during detection of especially fine particles in a carrier medium,
**characterized in that**
the scattered light signal is passed through a filter algorithm stage to evaluate the scattered light signal subject to specific filter algorithms and prior the comparison with preset thresholds, the scattered light signal is filtered differently in the filter algorithm stage based on its slope.

2. The method according to claim 1,
**characterized in that**
the scattered light signal further passes through a calibration stage for calibration with a reference signal and/or a drift compensation stage for adapting to prevailing environmental conditions over a time period of at least 24 hours and/or a temperature compensation stage for compensating the temperature dependency of the radiated light output of a light source and/or a sensitivity-adjustment stage for adapting to a required sensitivity.

3. The method according to claim 2 using an integration amplifier as a scattered light signal amplifier,
**characterized in that**
the integration time of the integration amplifier is set in the calibration stage such that the scattered light signal corresponds to a reference signal of a reference indicator.

4. The method according to claim 2 or 3,
**characterized in that**
the sensitivity of the scattered light receiver (13) is effected in the sensitivity-adjustment stage by changing a pulse width of a drive current of a light source (9) associated with the scattered light receiver (13).

5. The method according to claim 2 or 3,
**characterized in that**
the sensitivity of the scattered light receiver is effected in the sensitivity-adjustment stage by changing the integration time of the integration amplifier acting as a scattered light signal amplifier.

6. The method according to claim 5,
**characterized in that** the changing of the integration time is incremental or continuous.

7. The method according to claim 4,
**characterized in that**
the changing of the pulse width is incremental or continuous.

8. The method according to any one of claims 2 to 7,
**characterized in that**
a temperature sensor (23) for the temperature compensation of the scattered light signal in the temperature compensation stage is arranged in a flow path (7) of the carrier medium.

9. The method according to claim 8,
**characterized in that**
temperature compensation ensues by changing the pulse width of a drive current of a light source (9) associated with the scattered light receiver (13).

10. The method according to any one of claims 2 to 9,
**characterized in that**
the scattered light signal is lowpass filtered when its slope exceeds a pre-defined threshold.

11. The method according to any one of claims 2 to 10,
**characterized in that**
a chamber value is averaged over a relatively long period of time in the drift compensation stage to provide a tracked chamber value.

12. A scattered light detector for carrying out the method according to any one of claims 1 to 11, comprising
a housing (1) having an inlet opening (3) and an outlet opening (5) between which the carrier medium of the housing (1) flows along a flow path (7), a light source (9) which directs the light to a scattered light center (11) situated in the flow path (7), a scattered light receiver (13) for a portion of the light scattered on particles in the scattered light center (11), and a scattered light signal amplifier (17) to amplify the scattered light signal,
wherein
the scattered light signal amplifier (17) is configured as an integration amplifier,
**characterized in that**
a filter algorithm stage is provided to filter the scattered light signal based on its slope.

13. The scattered light detector according to claim 12,
**characterized in that**
switching means (19, 21) are provided to set the sensitivity of the scattered light receiver (13).

14. The scattered light detector according to claim 12 or 13,
**characterized in that**
a communication interface is provided, in particular to a PC or a network.

15. The scattered light detector according to any one of claims 12 to 14,
**characterized in that**
a switching input is provided to change the sensitivity of the scattered light receiver (13).

16. The scattered light detector according to any one of claims 12 to 15,
**characterized in that**
a temperature sensor (23) is provided in the flow path (7) of the carrier medium.

17. The scattered light detector according to any one of claims 12 to 16,
**characterized in that**
a flowmeter (25) is arranged in the flow path (7) of the carrier medium.

18. The scattered light detector according to claim 17,
**characterized in that**
the flowmeter (25) comprises a thermoelectric air flow sensor and a thermoelectric temperature sensor.

## Revendications

1. Procédé pour évaluer un signal de lumière diffusée qui est émis par un récepteur de lumière diffusée lors de la détection de particules en particulier fines dans un milieu porteur,
**caractérisé en ce que**
le signal de lumière diffusée traverse un étage à algorithme de filtrage pour évaluer le signal de lumière diffusée en fonction de certains algorithmes de filtrage, et **en ce que** dans l'étage à algorithme de filtrage, le signal de lumière diffusée est filtré, avant la comparaison à des valeurs seuils préréglées, de façon différente en fonction de sa pente.

2. Procédé selon la revendication 1,
**caractérisé en ce que**
le signal de lumière diffusée traverse en outre un étage de calibrage pour l'étalonnage par rapport à un signal de référence, et/ou un étage de compensation de dérive pour l'adaptation à des conditions environnantes présentes pendant une période temporelle d'au moins 24 heures, et/ou un étage de compensation de température pour la compensation de la dépendance de température de la puissance de rayonnement de lumière d'une source de lumière, et/ou un étage de réglage de sensibilité pour l'adaptation d'une sensibilité requise.

3. Procédé selon la revendication 2, comportant un amplificateur intégrateur à titre d'amplificateur de signal de lumière diffusée,
**caractérisé en ce que**
dans l'étage de calibrage, le temps d'intégration de l'amplificateur intégrateur est réglé de telle sorte que le signal de lumière diffusée correspond à un signal de référence d'un indicateur de référence.

4. Procédé selon la revendication 2 ou 3,
**caractérisé en ce que**
dans l'étage de réglage de sensibilité, la modification de la sensibilité du récepteur de lumière diffusée (13) s'effectue par modification de la largeur d'impulsion du courant excitateur d'une source de lumière (9) associée au récepteur de lumière diffusée (13).

5. Procédé selon la revendication 2 ou 3,
**caractérisé en ce que**
dans l'étage de réglage de sensibilité, la modification de la sensibilité du récepteur de lumière diffusée s'effectue par modification du temps d'intégration d'un amplificateur intégrateur faisant office d'amplificateur de signal de lumière diffusée.

6. Procédé selon la revendication 5,
**caractérisé en ce que**
la modification du temps d'intégration s'effectue en gradins ou en continu.

7. Procédé selon la revendication 4,
**caractérisé en ce que**
la modification de la largeur d'impulsion s'effectue en gradins ou en continu.

8. Procédé selon l'une des revendications 2 à 7,
**caractérisé en ce que**
dans l'étage de compensation de température, on utilise un capteur de température (23) agencé dans la voie d'écoulement (7) du milieu porteur en vue de la compensation de température du signal de lumière diffusée.

9. Procédé selon la revendication 8,
**caractérisé en ce que**
la compensation de température s'effectue par modification de la largeur d'impulsion du courant excitateur d'une source de lumière (9) associée au récepteur de lumière diffusée (13).

10. Procédé selon l'une des revendications 2 à 9,
**caractérisé en ce que**
le signal de lumière diffusée est filtré par un filtre passe-bas lorsque sa pente dépasse une valeur seuil prédéfinie.

11. Procédé selon l'une des revendications 2 à 10,
**caractérisé en ce que**
dans l'étage de compensation de dérive, on détermine pendant une période temporelle prolongée une valeur moyenne pour former une valeur moyenne suivie.

12. Détecteur de lumière diffusée pour mettre en oeuvre le procédé selon l'une des revendications 1 à 11, comportant
un boîtier (1) muni d'une ouverture d'entrée (3) et d'une ouverture de sortie (5) dans le boîtier (1), entre lesquelles le milieu porteur traverse le boîtier (1) sur une voie d'écoulement (7), une source de lumière (9) qui dirige de la lumière vers un centre de lumière diffusée (11) situé sur la voie d'écoulement (7), un récepteur de lumière diffusée (13) pour une partie de la lumière diffusée sur des particules dans le centre de lumière diffusée (11), et un amplificateur de signal de lumière diffusée (17) pour amplifier le signal de lumière diffusée,
l'amplificateur de signal de lumière diffusée (17) étant réalisé sous forme d'amplificateur intégrateur,
**caractérisé par**
un étage à algorithme de filtrage pour filtrer le signal de lumière diffusée en fonction de sa pente.

13. Détecteur de lumière diffusée selon la revendication 12,
**caractérisé en ce que**
il est prévu des moyens de commutation (19, 21) pour régler la sensibilité du récepteur de lumière diffusée (13).

14. Détecteur de lumière diffusée selon la revendication 12 ou 13,
**caractérisé en ce que**
il est prévu une interface de communication, en particulier avec un ordinateur personnel ou avec un réseau.

15. Détecteur de lumière diffusée selon l'une des revendications 12 à 14,
**caractérisé en ce que**
il est prévu une entrée de commutation pour commuter la sensibilité du récepteur de lumière diffusée (13).

16. Détecteur de lumière diffusée selon l'une des revendications 12 à 15,
**caractérisé par**
un capteur de température (23) dans la voie d'écoulement (7) du milieu porteur.

17. Détecteur de lumière diffusée selon l'une des revendications 12a 16,
**caractérisé par**
un débitmètre (25) agencé dans la voie d'écoulement (7) du milieu porteur.

18. Détecteur de lumière diffusée selon la revendication 17,
**caractérisé en ce que**
le débitmètre (25) est constitué par un capteur de flux d'air thermoélectrique et par un capteur de température thermoélectrique.
